# FASCICULE DE BREVET EUROPEEN

(11) **EP 3 397 461 B1**
(45) Date de publication et mention de la délivrance du brevet: **04.11.2020**
(21) Numéro de dépôt: 16825857.2
(22) Date de dépôt: 15.12.2016
(51) Int. Cl.: B29C 70/68

(54) **MOULE DE SURMOULAGE D'UN INSERT COMPRENANT UN SYSTÈME DE POSITIONNEMENT ET DE MAINTIEN DE L'INSERT**
FORM ZUM UMGIESSEN EINES EINSATZES MIT EINEM SYSTEM ZUM POSITIONIEREN UND HALTEN DES EINSATZES
MOULD FOR OVERMOULDING AN INSERT, COMPRISING A SYSTEM FOR POSITIONING AND HOLDING THE INSERT

(30) Priorité: 28.12.2015 FR 1563393
(43) Date de publication de la demande: 07.11.2018
(73) Titulaire: Compagnie Plastic Omnium, 69007 Lyon (FR)
(72) Inventeur: TORRES, Olivier, 69230 Saint-Genis Laval (FR)
(74) Mandataire: LLR
(86) Numéro de dépôt international: PCT/FR2016/053462
(87) Numéro de publication internationale: WO 2017/115026

(56) Documents cités:
- WO-A1-2015/049339
- CN-A- 103 991 160
- "IM FORMNEST FIXIERT", PLASTVERARBEITER, HUETHIG GMBH, HEIDELBERG, DE, vol. 48, no. 3, 1 March 1997 (1997-03-01), page 43/44, XP000659994, ISSN: 0032-1338

## Description

La présente invention concerne le domaine technique de la fabrication de pièces en matière plastique pour véhicule automobile, et notamment le domaine du surmoulage d'insert pour pièces automobiles.

Plus particulièrement, l'invention concerne un moule pour surmoulage d'inserts comportant un système pour positionner et maintenir en place un insert dans le moule, un ensemble d'un insert et du moule, et un procédé de fabrication d'une pièce surmoulée utilisant ce moule.

Dans de nombreuses industries et en particulier dans l'industrie automobile, on fabrique et l'on utilise des pièces hybrides comportant un insert, métallique ou en matière plastique, et une partie en matière plastique surmoulée sur l'insert afin de satisfaire des exigences imposées, par exemple des exigences de légèreté ou de résistance mécanique. Le surmoulage peut se faire par différentes techniques de moulage, telle que le moulage par compression et le moulage par injection. De plus, la réalisation sous forme hybride d'éléments permet également d'apporter des solutions de fonctionnalisation d'une pièce en matière plastique. Par exemple, pour assembler solidement deux pièces en matières plastiques, il est connu d'utiliser des inserts, métalliques notamment, comportant un moyen de fixation tel qu'un filetage (vis et/ou trou taraudé).

Le surmoulage consiste généralement à positionner l'insert dans une chambre de moulage du moule, avant, ou dans certains cas, après, l'introduction ou le fluage de la matière plastique. Selon la technologie utilisée, la matière plastique peut être sous forme de feuilles de résine chargées de renforts (moulage par compression notamment), telles que des feuilles SMC (« Sheet Molding Compound » en anglais), ou sous forme de matière thermoplastique fluide (moulage par injection).

Cependant, le maintien de l'insert dans une position déterminée lors du moulage est nécessaire pour le résultat requis. En effet, l'insert est susceptible de bouger lors des différentes étapes de moulage, en particulier à cause du mouvement de la matière plastique remplissant la chambre de moulage et venant en interface de l'insert. Or, la précision du positionnement de l'insert sur la pièce est importante pour assurer sa fonction. Par exemple, lorsque l'insert est utilisé pour fixer deux pièces, une bonne précision du positionnement de l'insert permet de de l'interfacer avec une autre pièce du véhicule. Un bon positionnement permet notamment de garantir le plaquage et/ou la coaxialité d'un insert fileté.

On connait des moules comportant un système de positionnement et de maintien de l'insert dans le moule. On connait par exemple du document EP0835730A2 un système dans lequel une tige vient s'insérer dans un orifice de l'insert. Le document WO2015049339 concerne un moule de surmoulage à chaud d'un insert composite.

Cependant, un tel système ne permet pas d'éviter que l'insert ne tourne sur lui-même. Cette solution n'est donc pas totalement satisfaisante.

Par ailleurs, pour le surmoulage d'un insert portant un élément fonctionnel, par exemple un moyen de fixation, pour réaliser une fixation robuste (structurelle) de la pièce finie sur le véhicule, il est nécessaire d'ancrer l'insert solidement dans la matière de surmoulage. On réalise donc généralement un surmoulage permettant d'envelopper au maximum l'insert, afin que ce dernier soit le plus ancré possible à la matière de surmoulage.

De ce fait, la face de l'insert portant le moyen de fixation (trou taraudé), peut être en partie recouverte par le surmoulage. Toutefois, le trou taraudé reste libre de matière de surmoulage afin de laisser au moins un trou de passage pour atteindre le filetage lors du vissage sur le véhicule de la pièce comprenant l'insert surmoulé.

Cependant, on préfère laisser la face portant le moyen de fixation libre de toute matière plastique, et rendre ainsi accessible « toute » la face d'appui de l'insert. Ceci permet d'éviter que l'interface avec le véhicule se fasse sur de la matière surmoulée (moins solide que l'insert qui est de préférence en métal).

Pour épargner une telle face, on pose habituellement cette face sur une paroi de la cavité, pour la protéger de la matière de moulage dans la chambre de la cavité.

Cependant, les contraintes de faisabilité industrielle liées aux formes de la pièce et de l'insert, ainsi qu'aux contraintes de moulabilité et démoulabilité peuvent empêcher de pouvoir poser l'insert à la verticale sur sa face d'appui où le filetage débouche.

Enfin, pour épargner une telle face, il est nécessaire d'assurer une étanchéité entre la face posée et la paroi de la cavité avec laquelle elle est en contact.

Les systèmes connus de positionnement et de maintien d'un insert dans un moule, ne sont donc pas entièrement satisfaisants, car aucun ne permet d'assurer l'ensemble des fonctions suivantes :
- maintenir une face de l'insert (face portant le trou taraudé) contre une paroi de la cavité, même lorsque l'insert ne peut pas reposer sur une paroi de la cavité, et notamment lorsqu'il n'est pas possible de poser (verticalement) cette face de l'insert sur une paroi du moule ;
- assurer un plaquage de la face contre la paroi de la cavité pour assurer l'étanchéité ;
- maintenir la position de l'insert dans le moule ; et
- éviter la rotation de l'insert dans sa position maintenue.

L'invention a pour but de remédier à ces inconvénients en fournissant un moule selon la revendication 1.

L'insert est maintenu dans une position déterminée grâce à l'organe d'engagement empêche des mouvements axiaux de l'insert en engageant l'insert. Grâce au moyen de verrouillage, un tel système permet un bon plaquage de l'insert contre la paroi de la cavité afin d'éviter que de la matière surmoulée flue entre l'insert et la cavité. De plus, toujours grâce au moyen de verrouillage, un tel système permet d'éviter que l'insert tourne sur lui-même grâce au moyen de verrouillage. Ainsi, le système de positionnement et de maintien rend l'insert insensible à toute perturbation produite lors du moulage. Le moyen de verrouillage est activé par le déplacement de l'organe d'engagement de sa position de désengagement vers sa position d'engagement. Aucune manipulation supplémentaire n'est nécessaire pour verrouiller l'insert.

L'engagement de l'insert se fait par déplacement de l'organe d'engagement de sa position de désengagement de l'insert vers sa position d'engagement de l'insert. Aucun mouvement de l'insert n'est exigé. Ainsi, l'action d'engagement n'est pas influencée par les propriétés de l'insert, en particulier par son poids, sa dimension ou sa forme et peut donc s'effectuer de la même manière, de façon répétitive, ce qui est particulièrement adapté à la cadence industrielle.

Par ailleurs, le système permet de maintenir l'insert dans une position autre que dans une position verticale car il n'est pas indispensable de poser l'insert sur un fond de la chambre de moulage. Cela est particulièrement intéressant pour un surmoulage de l'insert sur toutes les faces sauf sur une comprenant un élément fonctionnel, par exemple un élément de fixation structurel.

Le système de positionnement et de maintien comporte un moyen de maintien de l'insert lorsque le moule est ouvert, lors de l'engagement de l'organe d'engagement dans l'insert. L'engagement de l'insert par un déplacement de l'organe d'engagement génère une force susceptible de pousser l'insert vers le sens opposé. Le moyen de maintien permet de supporter l'insert et de générer une force qui vient contrer celle exercée par l'organe d'engagement. Ce support est notamment intéressant lorsque l'insert est léger ou à une surface glissante.

Le moyen de verrouillage est un filetage apte à coopérer avec un filetage de l'insert. Le filetage est un moyen de verrouillage simple et fiable. Le verrouillage s'active et se désactive par une rotation de l'insert ou de l'organe d'engagement. De préférence, le filetage de l'insert est également prévu pour réaliser une fixation avec une autre pièce du véhicule.

Le système de positionnement et de maintien comporte un élément d'étanchéité, solidaire en translation de l'organe d'engagement, mobile entre une position d'appui sur l'insert et une position de retrait, l'élément d'étanchéité étant composé de matière Peek ou en Viton®. L'élément d'étanchéité permet d'empêcher des infiltrations de la matière plastique sur la surface de contact entre l'insert et le système de positionnement et de maintien. Cette surface est en général fonctionnelle et doit donc être propre. L'élément d'étanchéité étant solidaire de l'organe d'engagement en translation, il peut se déplacer au moyen d'une translation de l'organe d'engagement. Ainsi, il n'est pas nécessaire de prévoir un moyen de déplacement supplémentaire.

Le moule de l'invention peut comporter en outre les caractéristiques suivantes prises seules ou combinées entre elles :
- Le système de positionnement et de maintien comporte un moteur apte à déplacer l'organe d'engagement entre la position d'engagement de l'insert et la position de désengagement de l'insert. Par exemple, le moteur peut mettre en translation et en rotation l'organe d'engagement à l'aide d'un système à vis sans fin.
- Le moyen de maintien de l'insert est un robot apte à positionner l'insert dans la chambre de moulage du moule. Le robot maintient l'insert en place après l'avoir correctement positionné afin de faciliter l'engagement de l'insert par l'organe d'engagement.
- Le moyen de verrouillage est choisi parmi :
   - un système d'encliquetage,
   - un système à baïonnette,
   - un système expansible
   - un système d'aspiration
   - un système électromagnétique pour un insert métallique.

Tous ces systèmes sont simples et facile à manipuler. Le système électromagnétique fonctionne à l'aide d'un système électrique qui permet de créer une aimantation à l'approche de l'insert pour ainsi le maintenir en position, et de supprimer l'aimantation une fois l'organe d'engagement est en position d'engagement de l'insert.
- Un élément d'étanchéité est présent dans une des deux parties du moule (celle supportant l'insert) et est indépendant et fixe par rapport à cette partie, cet élément étant composé de matière Peek ou Viton®. L'élément d'étanchéité permet d'empêcher des infiltrations de la matière plastique surmoulée risquant soit de recouvrir la face d'appui de l'insert, soit de bloquer les éléments fonctionnels, c'est-à-dire le filetage de l'insert, le mécanisme du moule (organe d'engagement, système de positionnement et maintien de l'insert). Cette surface d'appui est en général fonctionnelle pour réaliser un appui ou référentiel géométrique et doit donc être exempte de toute trace de surmoulage.
- L'organe d'engagement est mobile en translation selon une direction perpendiculaire à la direction d'ouverture du moule, appelée « direction horizontale ». L'engagement de l'insert se fait par translation de l'organe d'engagement. L'insert est alors positionné dans une position horizontale, et l'étanchéité est réalisée sur une surface de l'insert parallèle à la direction d'ouverture du moule.

L'invention concerne également un ensemble d'un insert et d'un moule selon l'invention, dans lequel l'organe d'engagement constitue un élément mâle ou femelle adapté à coopérer avec un élément femelle, ou respectivement mâle, correspondant sur l'insert.

L'ensemble de l'invention peut comporter en outre les caractéristiques suivantes prises seules ou combinées entre elles :
- L'ensemble selon la revendication précédente, dans lequel l'organe d'engagement comporte un filet coopérant avec un filet de l'insert. Le filet est un moyen de verrouillage simple qui peut coopérer avec un filet déjà existant sur l'insert, par exemple prévu pour réaliser une fixation avec une autre pièce du véhicule.
- L'organe d'engagement constitue une tige filetée et l'insert comporte un trou taraudé coopérant avec la tige filetée. Le trou taraudé peut être fonctionnel, par exemple prévu pour réaliser une autre fixation, ou réalisé pour coopérer avec la tige filetée.
- L'organe d'engagement forme une tige, et l'organe de verrouillage constitue un trou taraudé et l'insert comporte une tige filetée coopérant avec le trou taraudé. La tige peut être partiellement ou entièrement creuse pour loger le trou taraudé.
- Les filets sont configurés de façon à ce qu'après engagement et verrouillage de l'insert sur l'organe d'engagement, l'insert est en appui serré sur le système de positionnement et de maintien faisant étanchéité. Cela permet d'empêcher l'infiltration de matière sur les surfaces externes de l'insert devant restées propres. L'étanchéité est améliorée par la présence d'un élément d'étanchéité composé de matière Peek ou en Viton®.

L'invention concerne également un procédé de moulage d'une pièce de véhicule automobile en matière plastique comprenant au moins un insert partiellement surmoulé, dans lequel on réalise les étapes suivantes au moyen du moule selon l'invention :
- on introduit l'insert dans le moule, de préférence dans une position horizontale ;
- on déplace l'organe d'engagement dans sa position d'engagement de l'insert de sorte à engager et à verrouiller l'insert sur l'organe d'engagement ;
- on ferme le moule et l'on surmoule l'insert par de la matière plastique ;
- on déplace l'organe d'engagement dans sa position de désengagement de l'insert de sorte à désengager et à déverrouiller l'insert ;
- on ouvre le moule et l'on retire la pièce portant l'insert surmoulé.

L'élément d'étanchéité suit le mouvement de l'organe d'engagement en translation. Ainsi, il est en appui serré contre l'insert lors de son engagement par l'organe d'engagement et s'éloigne de l'insert lors du désengagement.

Le procédé peut être un procédé de moulage par compression dans lequel la matière plastique est introduite dans le moule avant la fermeture du moule sous forme de feuilles en matière plastique enrichies en renforts, par exemple sous forme de feuilles SMC (Sheet Molding Compound). La matière plastique, ensuite chauffé après la fermeture du moule, flue pour occuper toute la chambre de moulage et surmouler l'insert.

Le procédé peut également être un procédé de moulage par injection dans lequel la matière plastique est injectée dans le moule sous forme fluide après la fermeture du moule.

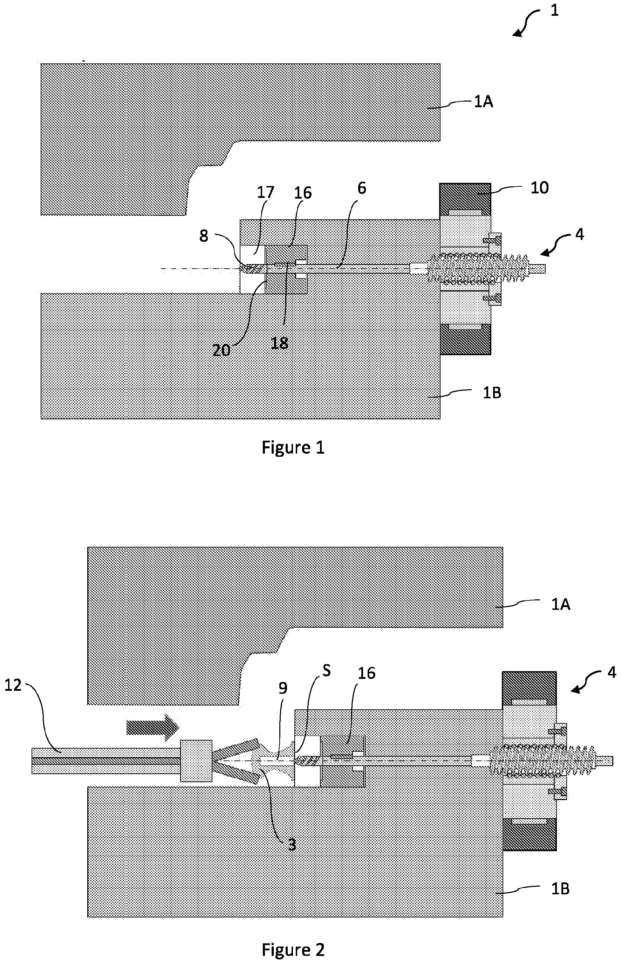

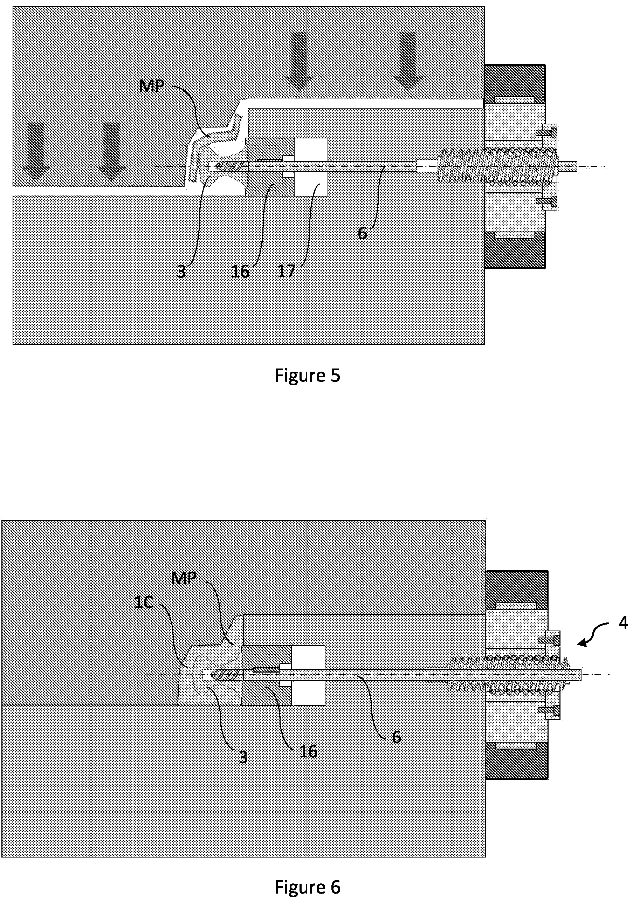

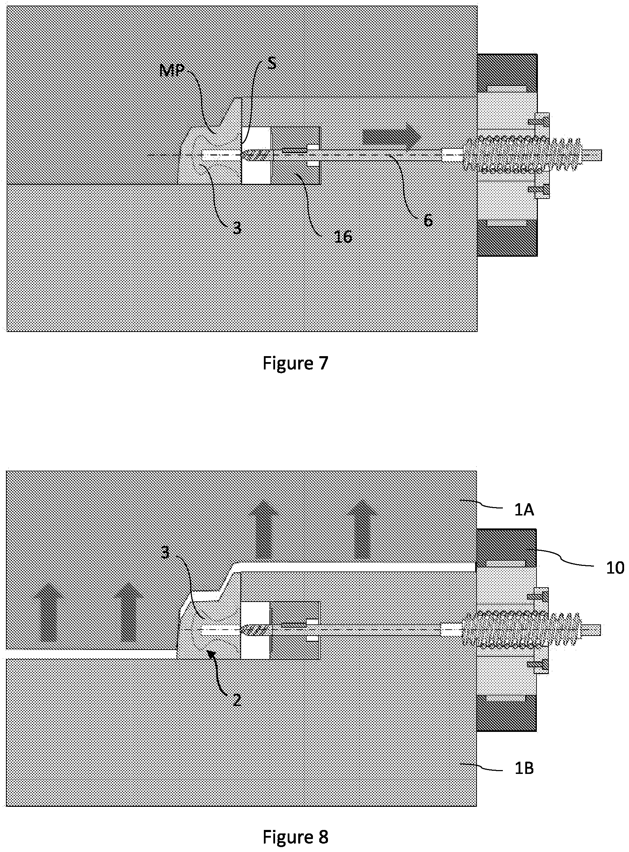

L'invention sera mieux comprise à la lecture des figures annexées, qui sont fournies à titre d'exemples et ne présentent aucun caractère limitatif, dans lesquelles les figures 1 à 9 illustrent un mode de réalisation d'un moule selon l'invention, ainsi que les différentes étapes de moulage d'un insert au moyen de ce moule.

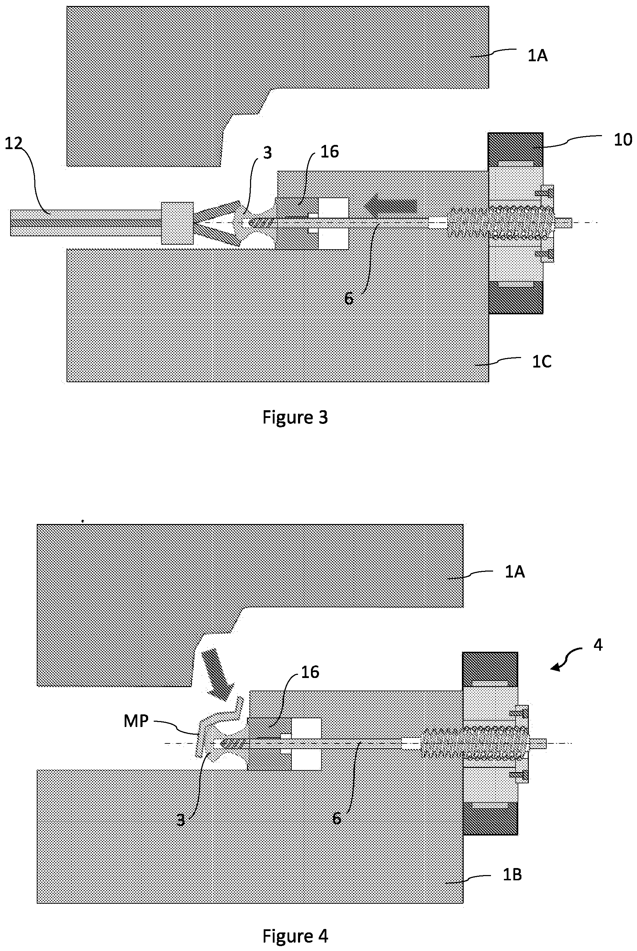

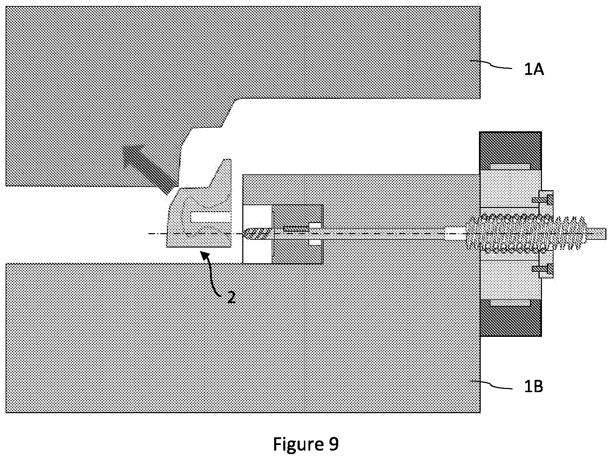

La figure 1 montre un moule 1 pour former une pièce 2 (voir figure9) de véhicule automobile en matière plastique MP (figure 9) comprenant un insert 3 partiellement surmoulé, comportant un système 4 de positionnement et de maintien d'un insert dans le moule 1. Le moule 1 comprend une première partie moulante 1A et une seconde partie moulante 1B délimitant au moins une chambre de surmoulage 1C de l'insert 3. Le système de positionnement et de maintien 4 comprend un organe d'engagement 6 d'un insert présent dans la seconde partie 1B, mobile entre une position d'engagement de l'insert (voir figure 3) et une position de désengagement de l'insert (voir figure 2). L'organe d'engagement 6 comporte un moyen de verrouillage 8 par déplacement de l'organe d'engagement 6 de sa position de désengagement de l'insert vers sa position d'engagement de l'insert.

L'insert 3 peut être réalisé en tout matériau, notamment en métal ou en matière plastique.

Le moule 1 permet notamment de surmouler partiellement l'insert 3. Le surmoulage est dit partiel lorsqu'au moins une surface de l'insert reste visible après surmoulage : la surface S n'est pas recouverte par de la matière plastique MP.

L'organe d'engagement 6 est une tige présentant une extrémité libre filetée apte à coopérer avec un filetage de l'insert 3. En effet, l'insert 3 comporte un trou taraudé 9 dans lequel peut s'insérer l'extrémité filetée de l'organe d'engagement 6. L'engagement de l'insert 3 se fait donc par une translation de l'organe d'engagement 6 accompagnée d'une rotation verrouillant l'insert 3 sur l'organe d'engagement 6 grâce au filetage. L'organe d'engagement 6 n'est pas limité à une tige filetée. En effet, dans d'autres modes de réalisation, l'organe d'engagement 6 peut être une tige comprenant un trou taraudé à son extrémité libre pouvant coopérer avec une tige filetée de l'insert 3. Le moyen de verrouillage 8 peut également être un embout rectangulaire fixé sur l'organe d'engagement apte à coopérer avec une forme complémentaire de l'insert. D'autres moyens de verrouillage 8 sont également adaptés, par exemple un système d'encliquetage, un système à baïonnette ou un système électromagnétique pour un insert métallique.

Le système de positionnement et de maintien 4 comporte un moteur 10 apte à déplacer l'organe d'engagement 6 entre la position d'engagement de l'insert et la position de désengagement de l'insert. Le moteur 10 déplace l'organe d'engagement 6 en translation et en rotation à l'aide d'un système à vis sans fin.

Le système de positionnement et de maintien 4 comporte un moyen de maintien de l'insert lorsque le moule est ouvert, lors de l'engagement de l'organe d'engagement dans l'insert. Le moyen de maintien de l'insert est un robot 12 apte à positionner l'insert dans la chambre de moulage du moule. Le robot 12 maintient l'insert en place après l'avoir correctement positionné afin de faciliter l'engagement de l'insert 3 par l'organe d'engagement 6.

Le système de positionnement et de maintien 4 comporte un élément d'étanchéité 16 présent dans la seconde partie moulante 1B, solidaire en translation de l'organe d'engagement 6, mobile entre une position d'appui sur l'insert et une position de retrait, l'élément d'étanchéité 16 étant composé de matière Peek (polyétheréthercétone) ou en Viton®. Nous pouvons voir sur les figures 2 et 3 que l'élément d'étanchéité 16 suit le mouvement de translation de l'organe d'engagement 6. Sa position d'appui correspond à la position d'engagement de l'organe d'engagement 6 et sa position de retrait correspondant à la position de désengagement de l'organe d'engagement 6. L'organe d'étanchéité 16 est un pavé annulaire positionné autour de la tige formant l'organe d'engagement 6, à proximité de l'extrémité libre filetée de la tige, dans une cavité 17 du moule 1. La cavité 17 débouche dans la chambre de moulage 1C. Elle définit la course de l'organe d'étanchéité 16. Lorsque l'organe d'étanchéité 16 est en position de retrait, il est positionné contre une paroi au fond de la cavité 17 qui définit la fin de course de retrait de l'organe d'étanchéité 16. Lorsque l'organe d'étanchéité 16 est en position d'appui, il obstrue la cavité 17 de sorte que la matière plastique MP ne puisse pas s'y infiltrer. L'organe d'engagement 6 comprend une clavette 18 qui le rend solidaire à l'organe d'étanchéité 6 en translation et en rotation. La forme et les propriétés surfaciques de l'organe d'étanchéité 16 permettent une rotation à frottement réduit de l'organe d'étanchéité par rapport au reste du moule 1. Cependant, l'organe d'étanchéité 16 peut aussi être solidaire de l'organe d'engagement 6 uniquement en translation. A la place de la clavette 18, l'organe d'engagement 6 peut comporter un anneau en saillie de sa surface externe apte à glisser en rotation dans un évidement annulaire sur la surface interne de l'organe d'étanchéité 16, *i.e.* sur la surface de contact entre l'organe d'étanchéité 16 et l'organe d'engagement 6. Ainsi, lorsque le moteur met en rotation et en translation l'organe d'engagement 6, l'organe d'étanchéité ne suit que son mouvement de translation.

L'organe d'étanchéité 16 comprend un renfoncement 20 ayant une forme complémentaire à la forme de la partie de l'insert 3 venant en appui contre l'organe d'étanchéité 16. Cela permet d'obtenir une étanchéité améliorée entre l'insert 3 et l'organe d'étanchéité 16. En raison de la présence du renfoncement 20, une partie de l'organe d'étanchéité 16 dépasse dans la chambre de moulage 1C lorsqu'il est en position d'appui, afin d'aider le démoulage de la pièce à la fin du procédé. En effet, l'insert 3 étant en appui serré contre le renfoncement 20 de l'organe d'étanchéité 16 lors du moulage, si l'organe d'étanchéité 16 ne dépasse pas de la cavité 17, une partie de la matière plastique MP s'infiltrera à l'intérieur de la cavité, autour de l'insert 3. Cette partie de la matière plastique MP gênera alors le démoulage de la pièce 2 finale qui s'effectue dans une direction 22 ayant une composante verticale. Le dépassement de l'organe d'étanchéité 16 de la cavité 17 doit être suffisant pour que l'insert 3 reste à l'intérieur de la chambre de moulage 1C pendant tout le moulage, et ne pénètre pas dans la cavité 17.

Dans un mode de réalisation préféré (non représenté), l'élément d'étanchéité 16 présent dans la seconde partie moulante 1B est indépendant et fixe par rapport à cette dernière. L'élément 16 ne se déplace donc pas par rapport au moule, en particulier, il ne se déplace pas avec l'organe d'engagement 6 qui se déplace, de préférence librement dans celui-ci. Sa position fixe est celle dans laquelle sa face d'appui avec l'insert est de préférence alignée avec la paroi moulante de la chambre de moulage 1C. Elle lui permet d'assurer un bon plaquage en compression, et donc l'étanchéité de l'insert 3 lorsque le système de positionnement et de maintien 4 a fini sa course de vissage. A ce moment l'insert 3 est vissé en compression avec l'élément d'élément 16 grâce aux propriétés de la matière employée dans cet élément 16.

Nous allons maintenant décrire un procédé de moulage par compression d'une pièce 2 de véhicule automobile en matière plastique comprenant au moins un insert 3 partiellement surmoulé au moyen du moule 1 selon l'invention, les étapes étant illustrées par les figures 2 à 9. Le procédé est en particulier appliqué à un insert 3 moulé horizontalement, *i.e.* dans une position perpendiculaire à la direction d'ouverture du moule 1.

Tout d'abord, on introduit l'insert 3 dans le moule 1 ouvert dans une position horizontale, manuellement ou au moyen du robot 12. Ce dernier maintient temporairement l'insert 3 en position afin d'aider l'organe d'engagement 6 à engager et à verrouiller l'insert 3. L'engagement se fait par un mouvement de translation horizontale accompagné d'un mouvement de rotation au moyen du moteur 10 afin d'activer les moyens de verrouillages 8. Parallèlement, l'élément d'étanchéité 16 se déplace de sa position de retrait vers sa position d'appui sur l'insert afin d'assurer l'étanchéité avec la surface S de l'insert 3. L'élément d'étanchéité 16 est en saillie par rapport à la cavité 17 dans sa position d'appui et l'insert 3 est en appui serré contre le renfoncement 20 de l'élément d'étanchéité 16. Une fois l'insert 3 verrouillé, le robot 12 se retire afin de libérer l'espace entre les parties 1A et 1B. On introduit ensuite la matière plastique MP sous forme de feuilles SMC avant de fermer le moule 1 et procéder au moulage.

Au cours du moulage, la matière plastique MP flue et occupe la chambre de moulage 1C.

Une fois le moulage achevé, pour éjecter la pièce 2, on déplace d'abord l'organe d'engagement 6 dans sa position de désengagement de l'insert 3 à l'aide du moteur 10. Ce désengagement est également accompagné du déverrouillage de l'insert 3 et de la libération de la surface S par l'élément d'étanchéité 16 qui reprend sa position de retrait en se déplaçant vers le fond de la cavité 17. On ouvre alors le moule 1 et l'on retire la pièce 2 portant l'insert 3 surmoulé dans la direction 22.

Il est également possible d'ouvrir le moule 1 avant le désengagement de l'insert 3. Ce dernier peut se faire à l'aide d'un moyen de maintien, par exemple un robot, qui maintient temporairement l'insert 3 en position afin de permettre le retrait de l'organe d'engagement 6 vers sa position de désengagement.

Dans le cas où l'élément d'étanchéité 16 est fixe dans la seconde partie moulant 1 B, il ne se déplace pas avec l'organe d'engagement 6 mais reste fixe dans une position où l'insert 3 va venir en appui pour faire étanchéité.

La pièce 2 peut également être moulée par injection. Pour procéder ainsi, on ferme le moule 1 après l'engagement et le verrouillage de l'insert 3 et on injecte de la matière plastique MP en fusion dans la chambre de moulage 1C. Après refroidissement de la matière plastique MP, on désengage et déverrouille l'insert 3 avant d'ouvrir le moule 1 pour retirer la pièce 2 comprenant l'insert 3.

## Revendications

1. Moule (1) pour former une pièce (2) de véhicule automobile en matière plastique comprenant un insert (3) partiellement surmoulé, comportant une première (1A) et seconde (1B) partie délimitant une chambre de moulage (1C), et un système (4) de positionnement et de maintien de l'insert dans le moule (1), **caractérisé en ce que** :
- le système (4) de positionnement et de maintien comprend un organe d'engagement (6) dans un insert, mobile entre une position d'engagement de l'insert et une position de désengagement de l'insert ;
- l'organe d'engagement (6) comporte un moyen de verrouillage (12) de l'insert par déplacement de l'organe d'engagement (6) de sa position de désengagement de l'insert vers sa position d'engagement de l'insert,
**caractérisé en ce que** le système (4) de positionnement et de maintien comporte un moyen de maintien de l'insert lorsque le moule est ouvert, lors de l'engagement de l'organe d'engagement (6) dans l'insert (3), le moyen de verrouillage (8) étant un filetage apte à coopérer avec un filetage de l'insert (3), le système de positionnement et de maintien (4) comportant un élément d'étanchéité (16), solidaire en translation de l'organe d'engagement (6), mobile entre une position d'appui sur l'insert et une position de retrait, l'élément d'étanchéité (16) étant composé de matière PEEK ou en Viton®.

2. Moule (1) selon la revendication 1, dans lequel le système (4) de positionnement et de maintien comporte un moteur (10) apte à déplacer l'organe d'engagement (6) entre la position d'engagement de l'insert et la position de désengagement de l'insert.

3. Moule (1) selon la revendication précédente, dans lequel le moyen de maintien de l'insert est un robot (12) apte à positionner l'insert dans la chambre de moulage (1C) du moule (1).

4. Moule (1) selon l'une des revendications précédentes, dans lequel l'organe d'engagement (6) est mobile en translation selon une direction perpendiculaire à la direction d'ouverture du moule (1).

5. Ensemble d'un insert (3) et d'un moule (1) selon l'une des revendications précédentes, dans lequel l'organe d'engagement (6) constitue un élément mâle ou femelle adapté à coopérer avec un élément femelle, ou respectivement mâle, correspondant sur l'insert (3).

6. Ensemble selon la revendication précédente, dans lequel l'organe d'engagement (6) comporte un filet coopérant avec un filet de l'insert (3).

7. Ensemble selon la revendication 6, dans lequel l'organe d'engagement (6) constitue une tige filetée et l'insert (3) comporte un trou taraudé coopérant avec la tige filetée.

8. Ensemble selon la revendication 6, dans lequel l'organe d'engagement (6) forme une tige, et l'organe de verrouillage (8) constitue un trou taraudé et l'insert (3) comporte une tige filetée coopérant avec le trou taraudé.

9. Ensemble selon l'une des revendications 6 à 8, dans lequel les filets sont configurés de façon à ce qu'après engagement et verrouillage de l'insert (3) sur l'organe d'engagement (6), l'insert (3) est en appui serré sur le système de positionnement et de maintien faisant étanchéité.

10. Procédé de moulage d'une pièce (2) de véhicule automobile en matière plastique (MP) comprenant au moins un insert (3) partiellement surmoulé, dans lequel on réalise les étapes suivantes au moyen du moule (1) selon l'une des revendications 1 à 4 :
- on introduit l'insert (3) dans le moule (1), de préférence dans une position horizontale ;
- on déplace l'organe d'engagement (6) dans sa position d'engagement de l'insert de sorte à engager et à verrouiller l'insert (3) sur l'organe d'engagement (6) ;
- on ferme le moule (1) et l'on surmoule l'insert (3) par une matière plastique (MP) ;
- on déplace l'organe d'engagement (6) dans sa position de désengagement de l'insert de sorte à désengager et à déverrouiller l'insert (3) ;
- on ouvre le moule (1) et l'on retire la pièce (2) portant l'insert (3) surmoulé.

11. Procédé selon la revendication précédente, dans lequel la matière plastique (MP) est introduite dans le moule (1) avant la fermeture du moule sous forme de feuilles en matière plastique enrichies en renforts, par exemple sous forme de feuilles SMC (Sheet Molding Compound).

12. Procédé selon la revendication 10, dans lequel la matière plastique (MP) est injectée dans le moule (1) sous forme fluide après la fermeture du moule.

## Patentansprüche

1. Formwerkzeug (1) zum Formen eines Teils (2) für Kraftfahrzeug aus Kunststoff, umfassend einen Einsatz (3), der teilweise umformt ist, mit einem ersten Teil (1A) und einem zweiten Teil (1B), die eine Formkammer (1C) begrenzen, und ein System (4) zum Positionieren und zum Halten des Einsatzes in dem Formwerkzeug (1),
**dadurch gekennzeichnet, dass**:
- das System (4) zum Positionieren und zum Halten ein Eingriffsorgan (6) in einem Einsatz umfasst, das beweglich ist zwischen einer Position zum Ineingriffbringen des Einsatzes und einer Position zum Außereingriffbringen des Einsatzes;
- das Eingriffsorgan (6) ein Mittel zum Verriegeln (8) des Einsatzes durch Bewegen des Eingriffsorgans (6) aus seiner Position zum Außereingriffbringen des Einsatzes in seine Position zum Ineingriffbringen des Einsatzes aufweist,
**dadurch gekennzeichnet, dass** das System (4) zum Positionieren und zum Halten ein Mittel zum Halten des Einsatzes bei geöffnetem Formwerkzeug beim Ineingriffbringen des Eingriffsorgans (6) in dem Einsatz (3) aufweist, wobei das Mittel zum Verriegeln (8) ein Gewinde ist, das zum Zusammenwirken mit einem Gewinde des Einsatzes (3) imstande ist, wobei das System (4) zum Positionieren und zum Halten ein Abdichtungselement (16) aufweist, das mit dem Eingriffsorgan (6) translationsfest ist und zwischen einer an dem Einsatz anliegenden Position und einer zurückgezogenen Position beweglich ist, wobei das Abdichtungselement (16) aus PEEK-Material oder aus Viton® ist.

2. Formwerkzeug (1) nach Anspruch 1, wobei das System (4) zum Positionieren und zum Halten einen Motor (10) aufweist, der imstande ist, das Eingriffsorgan (6) zwischen der Position zum Ineingriffbringen des Einsatzes und der Position zum Außereingriffbringen des Einsatzes zu bewegen.

3. Formwerkzeug (1) nach dem vorhergehenden Anspruch, wobei das Mittel zum Halten des Einsatzes ein Roboter (12) ist, der imstande ist, den Einsatz in der Formkammer (1C) des Formwerkzeugs (1) zu positionieren.

4. Formwerkzeug (1) nach einem der vorhergehenden Ansprüche, wobei das Eingriffsorgan (6) in einer Richtung senkrecht zu der Öffnungsrichtung des Formwerkzeugs (1) translationsbeweglich ist.

5. Anordnung aus einem Einsatz (3) und einem Formwerkzeug (1) nach einem der vorhergehenden Ansprüche, wobei das Eingriffsorgan (6) ein Einsteckelement oder Aufnahmeelement ist, das für das Zusammenwirken mit einem korrespondierenden Aufnahmeelement bzw. Einsteckelement an dem Einsatz (3) eingerichtet ist.

6. Anordnung nach dem vorhergehenden Anspruch, wobei das Eingriffsorgan (6) ein Gewinde aufweist, das mit einem Gewinde des Einsatzes (3) zusammenwirkt.

7. Anordnung nach Anspruch 6, wobei das Eingriffsorgan (6) eine Gewindestange ist und der Einsatz (3) ein mit Innengewinde versehenes Loch aufweist, das mit der Gewindestange zusammenwirkt.

8. Anordnung nach Anspruch 6, wobei das Eingriffsorgan (6) eine Stange bildet und das Verriegelungsorgan (8) ein mit Innengewinde versehenes Loch ist und der Einsatz (3) eine Gewindestange aufweist, die mit dem mit Innengewinde versehenen Loch zusammenwirkt.

9. Anordnung nach einem der Ansprüche 6 bis 8, wobei die Gewinde so ausgebildet sind, dass nach dem Ineingriffbringen und Verriegeln des Einsatzes (3) an dem Eingriffsorgan (6) der Einsatz (3) in fester Anlage an dem System zum Positionieren und zum Halten ist, das die Abdichtung bewirkt.

10. Verfahren zum Formen eines Teils (2) für Kraftfahrzeug aus Kunststoff (MP), umfassend wenigstens einen Einsatz (3), der teilweise umformt ist, wobei die folgenden Schritte mittels des Formwerkzeugs (1) nach einem der Ansprüche 1 bis 4 ausgeführt werden:
- Einführen des Einsatzes (3) in das Formwerkzeug (1), bevorzugt in einer horizontalen Position;
- Bewegen des Eingriffsorgans (6) in seine Position zum Ineingriffbringen des Einsatzes, so dass der Einsatz (3) an dem Eingriffsorgan (6) in Eingriff gebracht und verriegelt wird;
- Schließen des Formwerkzeugs (1) und Umformen des Einsatzes (3) mit einem Kunststoff (M);
- Bewegen des Eingriffsorgans (6) in seine Position zum Außereingriffbringen des Einsatzes, so dass der Einsatz (3) außer Eingriff gebracht und entriegelt wird;
- Öffnen des Formwerkzeugs (1) und Herausnehmen des Teils (2), das den umformten Einsatz (3) trägt.

11. Verfahren nach dem vorhergehenden Anspruch, bei dem der Kunststoff (MP) in das Formwerkzeug (1) vor dem Schließen des Formwerkzeugs in Form von mit Verstärkungen angereicherten Platten aus Kunststoff eingeführt wird, zum Beispiel mit SMC-(Sheet Molding Compound-) Platten.

12. Verfahren nach Anspruch 10, bei dem der Kunststoff (MP) in das Formwerkzeug (1) nach dem Schließen des Formwerkzeugs in fluidischer Form eingespritzt wird.

## Claims

1. Mould (1) for forming a motor vehicle part (2) made of plastic material comprising a partially overmoulded insert (3), having a first part (1A) and a second part (1B) defining a moulding chamber (1C), and a system (4) for positioning and holding the insert in the mould (1), **characterised in that**:
- the positioning and holding system (4) comprises a member (6) for engagement in an insert, movable between an insert engagement position and an insert disengagement position;
- the engagement member (6) comprises means (12) for locking the insert by displacing the engagement member (6) from its insert disengagement position to its insert engagement position,
**characterised in that** the positioning and holding system (4) comprises means for holding the insert when the mould is open, when engaging the engagement member (6) in the insert (3), the locking means (8) being a thread adapted to cooperate with a thread of the insert (3), the positioning and holding system (4) comprising a sealing element (16), connected in translation to the engagement member (6), movable between a bearing position on the insert and a withdrawal position, the sealing element (16) being made of Peek or Viton®.

2. Mould (1) according to claim 1, wherein the positioning and holding system (4) comprises a motor (10) adapted to move the engagement member (6) between the insert engagement position and the insert disengagement position.

3. Mould (1) according to the preceding claim, wherein the means for holding the insert is a robot (12) adapted to position the insert in the moulding chamber (1C) of the mould (1).

4. Mould (1) according to one of the preceding claims, wherein the engagement member (6) is movable in translation in a direction perpendicular to the opening direction of the mould (1).

5. Assembly of an insert (3) and a mould (1) according to one of the preceding claims, wherein the engagement member (6) forms a male or female element adapted to cooperate with a corresponding female, or respectively male, element on the insert (3).

6. Assembly according to the preceding claim, wherein the engagement member (6) comprises a thread cooperating with a thread of the insert (3).

7. Assembly according to claim 6, wherein the engagement member (6) forms a threaded rod and the insert (3) comprises a tapped hole cooperating with the threaded rod.

8. Assembly according to claim 6, wherein the engagement member (6) forms a rod and the locking member (8) forms a tapped hole ant the insert (3) comprises a threaded rod cooperating with the tapped hole.

9. Assembly according to one of claims 6 to 8, wherein the threads are configured so that after engaging and locking the insert (3) on the engagement member (6), the insert (3) is pressed tightly on the positioning and holding system in a sealed manner.

10. Method for moulding a motor vehicle part (2) made of plastic material (MP) comprising at least one partially overmoulded insert (3), wherein the following steps are performed using a mould (1) according to one of claims 1 to 4:
- inserting the insert (3) in the mould (1), preferably in a horizontal position;
- moving the engagement member (6) to its insert engagement position so as to engage and lock the insert (3) on the engagement member (6);
- closing the mould (1) and overmoulding the insert (3) with a plastic material (MP);
- moving the engagement member (6) to its insert disengagement position so as to disengage and unlock the insert (3);
- opening the mould (1) and removing the part (2) carrying the overmoulded insert (3).

11. Method according to the preceding claim, wherein the plastic material (MP) is introduced into the mould (1) before closing the mould in the form of sheets of plastic material enriched with reinforcements, for example in the form of sheets of SMC (Sheet Moulding Compound).

12. Method according to claim 10, wherein the plastic material (MP) is injected into the mould (1) in fluid form after closing the mould.
